# EUROPÄISCHE PATENTSCHRIFT

(11) **EP 3 381 160 B1**
(45) Veröffentlichungstag und Bekanntmachung des Hinweises auf die Patenterteilung: **17.04.2019**
(21) Anmeldenummer: 16826002.4
(22) Anmeldetag: 21.12.2016
(51) Int. Cl.: H04L 12/417

(54) **VERFAHREN ZUM ÜBERTRAGEN VON KOMMUNIKATIONSDATEN ZWISCHEN EINER VIELZAHL VON FAHRZEUGKOMPONENTEN EINES KRAFTFAHRZEUGS**
METHOD FOR TRANSMITTING COMMUNICATION DATA BETWEEN A MULTIPLICITY OF VEHICLE COMPONENTS OF A MOTOR VEHICLE
PROCÉDÉ DE TRANSMISSION DE DONNÉES DE COMMUNICATION ENTRE UNE PLURALITÉ DE COMPOSANTS D'UN VÉHICULE AUTOMOBILE

(30) Priorität: 22.12.2015 DE 102015016704
(43) Veröffentlichungstag der Anmeldung: 03.10.2018
(73) Patentinhaber: Audi AG, 85045 Ingolstadt (DE)
(72) Erfinder: HELLENTHAL, Berthold, 90596 Schwanstetten (DE)
(86) Internationale Anmeldenummer: PCT/EP2016/002153
(87) Internationale Veröffentlichungsnummer: WO 2017/108184

(56) Entgegenhaltungen:
- EP-A1- 2 221 209
- DE-A1-102012 204 944
- US-A1- 2010 254 392
- US-A1- 2013 136 007

## Beschreibung

Die Erfindung betrifft ein Verfahren zum Übertragen von Kommunikationsdaten zwischen einer Vielzahl von Fahrzeugkomponenten eines Kraftfahrzeugs. Die Fahrzeugkomponenten sind dazu über einen gemeinsamen Kommunikationskanal gekoppelt. Zu der Erfindung gehört auch ein Kraftfahrzeug, dass dazu eingerichtet ist, das Verfahren durchzuführen.

Damit in einem Kraftfahrzeug Fahrzeugkomponenten wie beispielsweise Steuergeräte und Sensoren Kommunikationsdaten austauschen können, ist ein Datenbus oder Kommunikationsbus nötig. Die Architektur dieses Kommunikationsbusses definiert den Datenfluss, das heißt durch sie ist festgelegt, welche Fahrzeugkomponente überhaupt nur mit welcher anderen Fahrzeugkomponente direkt oder über ein Gateway kommunizieren kann. Ist bei der Entwicklung eines Kraftfahrzeugs die Architektur festgelegt, wird dann entsprechend die Verkabelung des Kraftfahrzeugs geplant. Dieser Vorgang ermöglicht keine weitere flexible, schnelle Entwicklung von zusätzlichen Funktionen vor dem Übergang zur Serienproduktion des Kraftfahrzeugs. Außerdem führen Varianten aufgrund unterschiedlicher Ausstattungen einzelner Kraftfahrzeuge zu komplexen Kabelbaumvarianten für die Verkabelung. Insgesamt ist hierdurch eine Busstruktur aufgrund des komplexen Kabelbaums schwer und teuer.

Aus der DE 10 2010 018 994 A1 ist ein Fahrerassistenzsystem eines Kraftfahrzeugs bekannt, bei welchem Sensoren ihre Sensordaten in einem einheitlichen Format in einer digitalen Umgebungskarte speichern, aus welcher dann wiederum Steuergeräte Informationen auslesen können. Hierdurch werden alle Sensordaten in der digitalen Umgebungskarte gebündelt, unabhängig davon, welches Steuergerät im Nachhinein die Sensordaten nutzt. Somit ist keine direkte Übertragung der Sensordaten zu einzelnen Steuergeräten hin nötig. Nachteilig an dieser Lösung ist, dass hiermit nur Sensordaten vereinheitlicht übertragen werden können, die sich in einer digitalen Umgebungskarte abbilden lassen.

Aus der DE 10 2014 100 628 A1 ist ein Bussystem bekannt, welches zum Übertragen von Daten zwischen einzelnen Fahrzeugkomponenten Zeitslots vorsieht. Die Größe dieser Zeitslots ist variabel, sodass in Abhängigkeit von den zu übertragenden Kommunikationsdaten entsprechend angepasste Datenframes in den Zeitslots übertragen werden können. Nachteilig bei diesem Bussystem ist, dass mit jedem übertragenen Datenframe ein Header nötig ist, in welchem beschrieben ist, wie die nachfolgenden Zeitslots strukturiert sind. Dies erzeugt einen unerwünschten Overhead.

Aus der DE 102 19 439 A1 ist ein Steuerungssystem für ein Kraftfahrzeug bekannt, bei welchem ein Gateway mehrer Modulbusse verbindet, über welche jeweils eine Untergruppe oder Teilgruppe der Steuergeräte des Kraftfahrzeugs zusammengefasst sind. Das Gateway ist modular aufgebaut, sodass für das Anschließen eines jeweiligen Modulbusses eine Steckkarte nachträglich eingebaut werden kann. Nachteilig beim Vorsehen eines Gateways ist, dass der gesamte Datenverkehr, der zwischen zwei Modulbussen ausgetauscht werden soll, über das Gateway geführt werden muss, sodass dieses unter Umständen stark ausgelastet ist.

Aus der US 2013/136007 A1 ist bekannt, eine Broadcast-Kommunikation in einem Kommunikationsbus zu verwenden, um Nachrichten an mehrere Busteilnehmer zugleich auszusenden. Da eine Broadcast-Kommunikation zu Kollisionen zwischen den sendenden Busteilnehmern führen kann, weisen die Busteilnehmer eine Hierarchie auf und bei gleichzeitig ausgesendeten Nachrichten wird nur die dominanteste Nachricht vollständig gesendet.

Der Erfindung liegt die Aufgabe zugrunde, in einem Kraftfahrzeug Kommunikationspfade, über welche Fahrzeugkomponenten Kommunikationsdaten austauschen, flexibel und mit geringem Zeitaufwand anpassen zu können.

Die Aufgabe wird durch die Gegenstände der unabhängigen Patentansprüche gelöst. Vorteilhafte Weiterbildungen der Erfindung ergeben sich durch die abhängigen Patentansprüche, die folgende Beschreibung, sowie die Figuren.

Durch die Erfindung ist ein Verfahren zum Übertragen von Kommunikationsdaten zwischen einer Vielzahl von Fahrzeugkomponenten eines Kraftfahrzeugs bereitgestellt. Die Fahrzeugkomponenten sind über einen gemeinsamen Kommunikationskanal gekoppelt. Bei den Fahrzeugkomponenten kann es sich jeweils beispielsweise um ein Steuergerät oder eine Sensoreinrichtung oder eine Aktoreinrichtung handeln. Als Kommunikationskanal kann beispielsweise ein drahtgebundener Datenbus oder eine Funkverbindung, beispielsweise ein WLAN (Wireless Local Area Network) vorgesehen sein. Damit die Kommunikation zwischen den Fahrzeugkomponenten flexibel gestaltet werden kann, ist erfindungsgemäß vorgesehen, dass die Fahrzeugkomponenten die Kommunikationsdaten jeweils paarweise zwischen sich übertragen, in dem jeweils eine der Fahrzeugkomponenten ihre zu sendenden Kommunikationsdaten bedarfsunabhängig, das heißt ohne ein Anfrage einer anderen Fahrzeugkomponenten, und ohne Zieladressat über den Kommunikationskanal aussendet, sodass die gesendeten Kommunikationsdaten mehrere oder alle der übrigen Fahrzeugkomponenten erreichen, und zumindest eine der übrigen Fahrzeugkomponenten die Kommunikationsdaten bedarfsabhängig über den Kommunikationskanal mitliest und speichert. Bedarfsabhängig meint hierbei, dass durch ein Steuerprogramm der Fahrzeugkomponenten signalisiert wird, dass die Kommunikationsdaten benötigt werden oder verarbeitet werden sollen. Durch das Aussenden der Kommunikationsdaten ohne Zieladressat an die übrigen Fahrzeugkomponenten ist es also nicht nötig, Kommunikationspfade zu planen. Jede Fahrzeugkomponente kann bedarfsabhängig diejenigen Kommunikationsdaten mitlesen und speichern, die sie benötigt. Damit das Senden der Kommunikationsdaten kollisionsfrei verläuft, senden alle sendenden Fahrzeugkomponenten ihre jeweiligen Kommunikationsdaten zu vorbestimmten Sendezeitpunkten aus. Das Aussenden der Kommunikationsdaten erfolgt also Zeitslot-basiert. Alle sendenden Fahrzeugkomponenten legen dabei ihre Sendezeitpunkte unabhängig von einem Busmaster für den Kommunikationskanal auf der Grundlage eines in jeder sendenden Fahrzeugkomponente gespeicherten Sendezeitplans fest. Der Sendezeitplan kann auch in den empfangenen Fahrzeugkomponenten festgelegt sein, sodass diese wissen, welche Fahrzeugkomponente zu welchem Sendezeitpunkt sendet. Indem im Sendezeitplan die Sendezeitpunkte festgelegt sind, sind auch feste Latenzzeiten garantiert, sodass das erfindungsgemäße Verfahren auch für Regelschleifen oder Regelverfahren oder Regelalgorithmen geeignet ist. Zudem ist kein Routing oder Vermitteln der Kommunikationsdaten nötig, wenn die ausgesendeten Kommunikationsdaten von allen übrigen Fahrzeugkomponenten bei Bedarf mitgelesen werden können, da die Kommunikationsdaten alle übrigen Fahrzeugkomponenten erreichen.

Bei den Kommunikationsdaten kann es sich beispielsweise jeweils um Sensordaten und/oder Stelldaten für Aktoreinrichtungen und/oder um aktualisierte Steuerprogramme zum Durchführen eines Updates in einer programmierbaren Steuereinrichtung und/oder um Parameter zum Einstellen einer Steuereinrichtung und/oder einer Sensoreinrichtung und/oder einer Aktoreinrichtung und/oder um Diagnosedaten und/oder um Schaltdaten zum Schalten von Funktionen in einer Fahrzeugkomponente handeln.

Zu der Erfindung gehören auch Weiterbildungen, durch deren Merkmale sich zusätzliche Vorteile ergeben.

Eine Weiterbildung sieht vor, dass ein neuer Sendezeitplan über den Kommunikationskanal an alle Fahrzeugkomponenten als Ersatz für den bis dahin genutzten Sendezeitplan ausgesendet wird. Mit anderen Worten werden also z.B. die Sendezeitpunkte durch den neuen Sendezeitplan neu festgelegt. Hierdurch kann die Zuteilung der Sendezeitpunkte zu den sendenden Fahrzeugkomponenten angepasst werden. Beispielsweise kann hierdurch einer Prioritätsregelung entsprochen werden, welche vorbestimmten Fahrzeugkomponenten für einen vorbestimmten Zeitraum den Vorzug vor anderen Fahrzeugkomponenten beim Senden von Kommunikationsdaten geben soll.

So ist insbesondere vorgesehen, dass der neue Sendezeitplan in Abhängigkeit von einem Betriebszustand des Kraftfahrzeugs ausgesendet wird. Hierdurch kann in vorteilhafter Weise beispielsweise die Fahrsituation und/oder ein Betriebsmodus einer der Fahrzeugkomponenten berücksichtigt werden. Genauso kann beispielsweise auf eine Datenveränderungsgeschwindigkeit der von einer Fahrzeugkomponente zu sendenden Kommunikationsdaten reagiert werden. Zusätzlich oder alternativ zu den Sendezeiten kann durch den neuen Sendezeitplan auch ein Datenprotokoll, gemäß welchem die Kommunikationsdaten ausgesendet werden, eingestellt werden. Hierdurch ergibt sich der Vorteil, dass auch das Datenprotokoll flexibel ist und an das zu übertragende Datenvolumen der Kommunikationsdaten angepasst werden kann.

Damit nur autorisierte Fahrzeugkomponenten Kommunikationsdaten über den Kommunikationskanal senden und/oder auslesen können, kann vorgesehen sein, dass die Kommunikationsdaten mittels einer kryptografischen Verschlüsselung verschlüsselt werden. In diesem Zusammenhang sieht eine vorteilhafte Weiterbildung vor, dass auch unter den autorisierten Fahrzeugkomponenten, die alle die verschlüsselten Kommunikationsdaten entschlüsseln können, eine geheime Kommunikation stattfinden kann. Hierzu ist gemäß der Weiterbildung vorgesehen, dass innerhalb einer Teilgruppe der Fahrzeugkomponenten, beispielsweise zwischen genau zwei Fahrzeugkomponenten, die zu übertragenden Kommunikationsdaten mittels einer Punkt-zu-Punk-Verschlüsselung verschlüsselt werden, sodass zwar alle Fahrzeugkomponenten die ausgesendeten, verschlüsselten Kommunikationsdaten empfangen können, aber nur die Fahrzeugkomponenten der Teilgruppe die empfangenen Kommunikationsdaten entschlüsseln. Hierdurch können also auch autorisierte Fahrzeugkomponenten am Mitlesen oder Interpretieren der Kommunikationsdaten gehindert werden, in dem sie von der Teilgruppe ausgeschlossen sind. Ein weiterer Vorteil ist, dass eine empfangende Fahrzeugkomponente verifizieren kann, dass die verschlüsselten Kommunikationsdaten von einer vorbestimmten sendenden Fahrzeugkomponenten stammen oder ausgesendet sein müssen, indem festgestellt oder verifiziert wird, wenn nämlich die korrekte Verschlüsselung vorliegt.

Bei einer Weiterbildung nutzt zumindest eine der Fahrzeugkomponente die mitgelesenen und gespeicherten Kommunikationsdaten nur dann für eine weitere Verarbeitung, falls zuvor eine Identität der Fahrzeugkomponente, von welcher die Kommunikationsdaten ausgesendet worden sind, verifiziert worden ist. Dies kann durch die beschriebene Punkt-zu-Punkt-Verschlüsselung realisiert sein oder beispielsweise durch eine Komponentenkennung, die zusammen mit den Kommunikationsdaten ausgesendet werden kann.

Eine Weiterbildung sieht vor, dass durch die Fahrzeugkomponente ermittelt oder überprüft wird, ob eine Betriebszustandsänderung, welche durch die gespeicherten Kommunikationsdaten in der Fahrzeugkomponente ausgelöst werden soll, zu einem aktuellen Zeitpunkt gemäß einem vorbestimmten Überprüfungskriterium zulässig ist. Mit anderen Worten nutzt die Fahrzeugkomponente die mitgelesenen und gespeicherten Kommunikationsdaten nur dann, wenn durch sie eine aktuell zulässige Zustandsänderung in der Fahrzeugkomponente hervorgerufen wird.

Eine Weiterbildung sieht vor, dass zumindest einige der Kommunikationsdaten zusammen mit einem Zeitstempel ausgesendet werden. Hierdurch kann eine empfangende Fahrzeugkomponente überprüfen, ob die Kommunikationsdaten noch für sie relevant oder aktuell sind, und sie andernfalls verwerfen.

Eine Weiterbildung betrifft die Ausgestaltung des Kommunikationskanals. Sie sieht vor, dass als der Kommunikationskanal durch zumindest eine zum Versorgen der Fahrzeugkomponenten mit elektrischer Energie bereitgestellte elektrische Versorgungsleitung bereitgestellt wird. Mit anderen Worten wird durch das Verfahren mit dieser Weiterbildung eine Powerline-Kommunikation realisiert. Hierzu kann beispielsweise eine Plus-Leitung und/oder eine Masseleitung des Kraftfahrzeugs genutzt werden. Wenn beide Leitungen genutzt werden, ergibt sich hierdurch eine höhere Datenbandbreite. Es können auch Teilabschnitte der Versorgungsleitung jeweils gleichzeitig für die Übertragung unterschiedlicher Kommunikationsdaten verwendet werden, indem die Fahrzeugkomponenten untereinander eine sogenannte MESH-Netzwerkstruktur bilden, bei welcher die Übertragung der Kommunikationsdaten an einer Fahrzeugkomponente zunächst endet und durch diese Fahrzeugkomponente dann aber die empfangenen Kommunikationsdaten über eine andere Versorgungsleitung an weitere Fahrzeugkomponenten weitergeleitet werden.

Eine Weiterbildung sieht vor, dass zum Übertragen der Kommunikationsdaten ein Mehrfrequenz-Übertragungsverfahren, insbesondere ein OFDM-Verfahren (OFDM - Orthogonal Frequency-Division Multiplex) genutzt wird. Mittels eines Mehrfrequenz-Übertragungsverfahrens können gleichzeitig mehrere Fahrzeugkomponenten ihre Kommunikationsdaten aussenden.

Mittels eines Mehrfrequenz-Übertragungsverfahrens können auch Kommunikationspfade gestaltet werden. Eine Weiterbildung sieht hierzu vor, dass von den mehreren Frequenzen des Mehrfrequenz-Übertragungsverfahrens zumindest eine nur an eine Teilgruppe oder Untergruppe der Fahrzeugkomponenten ausgesendet wird, wobei insgesamt alle Fahrzeugkomponenten aber paarweise untereinander immer noch über eine gemeinsame Frequenz oder über eine die Kommunikationsdaten zwischen zwei der Frequenzen übertragende Brückenkomponente oder Bridge-Komponente gekoppelt sind. Es kann also beispielsweise vorgesehen sein, dass über eine Frequenz alle Fahrzeugkomponenten direkt kommunizieren können und über eine weitere Frequenz nur die Teilgruppe oder Untergruppe, sodass die selbe Frequenz von einer weiteren Teilgruppe oder Untergruppe ohne Interferenz oder Störung mit der ersten Untergruppe für die Übertragung von Kommunikationsdaten in einem anderen Teil des Kraftfahrzeugs genutzt werden kann. Hierdurch können dann Kommunikationsdaten jeweils über diejenige Frequenz ausgesendet werden, die nur von derjenigen Untergruppe empfangen wird, die Bedarf an den Kommunikationsdaten hat.

Optional kann auch vorgesehen sein, dass die Kommunikationsdaten mittels eines Komprimierungsverfahrens gepackt ausgesendet werden, wodurch zusätzlich Übertragungsbandbreite gewonnen wird.

Auch kann vorgesehen sein, dass Fahrzeugkomponenten im laufenden Betrieb des Kommunikationskanals zu dem Kommunikationskanal hinzugefügt oder von diesem entkoppelt werden. Hierdurch wird ein Hot-Plug-in-Mechanismus realisiert. Da durch das Verfahren die Kommunikation unabhängig von Zieladressaten erfolgt, wird das Sendeverhalten von sendenden Fahrzeugkomponenten durch ein solches Hot-Plug-in nicht gestört.

Wie bereits ausgeführt gehört zu der Erfindung auch ein Kraftfahrzeug, bei dem es sich bevorzugt um einen Kraftwagen, insbesondere einen Personenkraftwagen, handelt. Das Kraftfahrzeug weist eine Vielzahl von Fahrzeugkomponenten der beschriebenen Art und einen die Fahrzeugkomponenten zum Übertragen von Kommunikationsdaten koppelnden Kommunikationskanal auf. Der Kommunikationskanal ist insbesondere durch die beschriebene, zumindest eine elektrische Versorgungsleitung gebildet, über welche die Fahrzeugkomponenten insbesondere mit einer elektrischen Energiequelle, beispielsweise einer Fahrzeugbatterie und/oder einem Generator, gekoppelt sind. Das Kraftfahrzeug ist dazu eingerichtet, zum Übertragen der Kommunikationsdaten eine Ausführungsform des erfindungsgemäßen Verfahrens durchzuführen. Hierdurch kann in dem Kraftfahrzeug die Kommunikation zwischen den Fahrzeugkomponenten flexibel gestaltet und auch im Nachhinein und/oder kurzfristig umgestaltet werden, ohne dass hierzu eine Verdrahtung der Fahrzeugkomponenten verändert werden muss.

Im Folgenden ist ein Ausführungsbeispiel der Erfindung beschrieben. Hierzu zeigt:
- Fig. 1: eine schematische Darstellung einer Ausführungsform des erfindungsgemäßen Kraftfahrzeugs;
- Fig. 2: ein Diagramm zur Veranschaulichung eines Kommunikationskanals mit mehreren Frequenzen eines Mehrfrequenz-Übertragungsverfahrens.

Bei dem im Folgenden erläuterten Ausführungsbeispiel handelt es sich um eine bevorzugte Ausführungsform der Erfindung. Bei dem Ausführungsbeispiel stellen die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

In den Figuren sind funktionsgleiche Elemente jeweils mit denselben Bezugszeichen versehen.

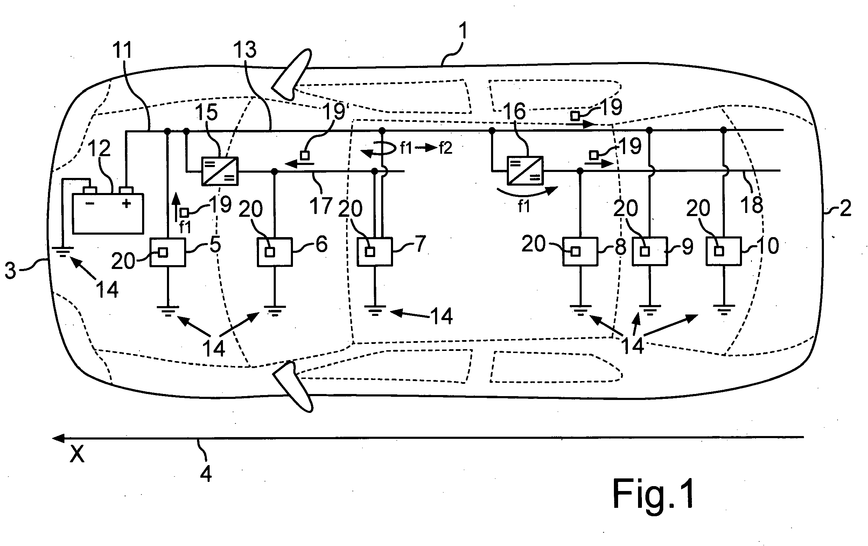

Fig. 1 zeigt ein Kraftfahrzeug 1, bei dem es sich beispielsweise um einen Kraftwagen, insbesondere einen Personenkraftwagen, handeln kann. Zur besseren Orientierung ist eine von einem Fahrzeugheck 2 zu einer Fahrzeugfront 3 verlaufende Fahrzeuglängsrichtung oder X-Richtung veranschaulicht. Das Kraftfahrzeug 1 kann Steuergeräte 5, 6, 7, 8, 9, 10 aufweisen. Diese dargestellten Steuergeräte 5 - 10 sind lediglich beispielhaft. Jedes der Steuergeräte 5 - 10 stellt beispielhaft eine Fahrzeugkomponente des Kraftfahrzeugs 1 dar. Zur Versorgung der Steuergeräte 5 - 10 kann bei dem Kraftfahrzeug 1 ein elektrisches Bordnetz 11 bereitgestellt sein, über welches die Steuergeräte 5 - 10 mit einer elektrischen Energiequelle 12 verbunden sein können. Hierzu kann beispielsweise eine Plus-Leitung 13 und eine Masseleitung 14 in an sich bekannter Weise durch das Bordnetz 11 bereitgestellt sein. Die Masseleitung 14 kann insbesondere als eine Karosseriemasse z.B. auf der Grundlage von Massebolzen oder als eine getrennte, eigenständige Masserückleitung ausgebildet sein.

Zur Veranschaulichung eines weiteren Aspekts der Erfindung sei davon ausgegangen, dass das Bordnetz 11 beispielsweise auf der Grundlage von Gleichspannungswandlern 15, 16 zusätzliche Netzzweige 17, 18 aufweisen kann. Anstelle der Gleichspannungswandler 15, 16 kann jeweils beispielsweise auch ein Schalter vorgesehen sein. Eine mögliche Verschaltung der Steuergeräte 5 - 10 mit dem Bordnetz 11 ist in Fig. 1 beispielhaft veranschaulicht.

Die Fahrzeugkomponenten 5 - 10 tauschen in dem Kraftfahrzeug 1 während dessen Betrieb Kommunikationsdaten aus, wobei in Fig. 1 beispielhaft davon ausgegangen ist, dass das Steuergerät 5 als eine sendende Fahrzeugkomponente Kommunikationsdaten 19 aussendet. Bei dem Kraftfahrzeug 1 ist es hierzu nicht nötig, dass die Steuergeräte 5 - 10 über einen zusätzlichen Kommunikationsbus mit einem Busmaster gekoppelt sind, damit durch den Busmaster die Kommunikationsdaten 19 gezielt bei dem Steuergerät 5 abgefragt werden und an das Zielgerät weitergeleitet werden.

Stattdessen ist bei dem Kraftfahrzeug 1 vorgesehen, dass das sendende Steuergerät 5 die Kommunikationsdaten 19 über das Bordnetz 11 an alle übrigen Steuergeräte 6 - 10 aussendet. Das Bordnetz 11 stellt hierdurch einen Kommunikationskanal zum Austauschen der Kommunikationsdaten 19 dar. Das Kraftfahrzeug 1 sendet seine Kommunikationsdaten 19 zudem ohne einen bestimmten Zieladressaten aus und unabhängig davon, ob momentan eines der übrigen Steuergeräte 6 - 10 überhaupt die Kommunikationsdaten 19 benötigt.

In dem in Fig. 1 veranschaulichten Beispiel verwenden die Steuergeräte 5 - 10 zum Übertragen von Kommunikationsdaten ein OFDM-Verfahren, durch welches z.B. die Kommunikationsdaten 19 auf die Versorgungsspannung des Bordnetzes 11 aufmoduliert werden können. Fig. 1 veranschaulicht, dass die Kommunikationsdaten 19 durch das Steuergerät 5 bei einer Frequenz f1 ausgesendet werden. Über die Plus-Leitung 13 können die Kommunikationsdaten 19 direkt zu den Steuergeräten 7, 9 und 19 gelangen. Beispielhaft sei angenommen, dass durch den Gleichspannungswandler 15 die Frequenz f1 blockiert wird, sodass die Kommunikationsdaten 19 nicht zu dem Steuergerät 6 direkt gelangen können. Das Steuergerät 7 fungiert deshalb in diesem Beispiel als ein Bridge-Element, welches aus der Plus-Leitung 13 die Kommunikationsdaten 19 empfängt und diese in dem Bordnetzzweig 17 z.B. bei einer Frequenz f2 des OFDM-Verfahrens an das Steuergerät 6 als Kommunikationsdaten 19' weiterleitet.

In Fig. 1 ist als weitere Veranschaulichung gezeigt, wie der Gleichspannungswandler 16 für die Frequenz f1 transparent oder durchgängig ist, sodass die Kommunikationsdaten 19 direkt zu dem Steuergerät 8 gelangen.

Dagegen kann vorgesehen sein, dass der Gleichspannungswandler 16 für die zweite Frequenz f2 undurchlässig ist, sodass das Steuergerät 8 in dem Bordnetzzweig 18 mit weiteren (nicht dargestellten) Steuergeräten bei der Frequenz f2 kommunizieren kann, ohne dass diese Kommunikationsdaten auf die Plus-Versorgungsleitung 13 gelangen.

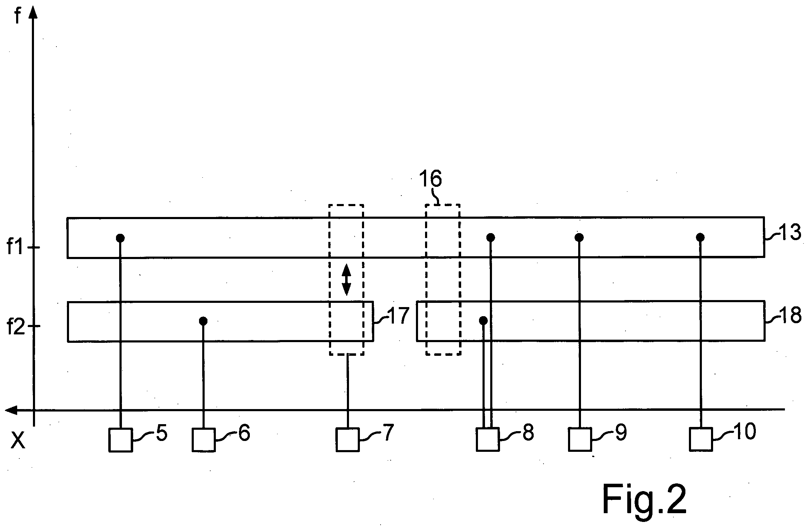

Dies ist noch einmal in Fig. 2 anhand eines Frequenzschemas des OFDM-Verfahrens veranschaulicht. In Orientierung an dem Plan des Kraftfahrzeugs 1 gemäß Fig. 1 ist horizontal der Verlauf der Fahrzeuglängsrichtung X dargestellt, während als Ordinate die Frequenz f zweier Frequenzkanäle des OFDM-Verfahrens dargestellt ist. Auf der Frequenz f1 können die Steuergeräte 5 - 10 entlang der gesamten Fahrzeuglänge kommunizieren, wobei das Steuergerät 8 über den Gleichspannungswandler 16 auf beide Frequenzen f1, f2 Zugriff hat. Dagegen ist das Steuergerät 6 durch den Gleichspannungswandler 15 daran gehindert, aus der Plus-Versorgungsleitung 13 Kommunikationsdaten auf den Frequenzen f1, f2 zu empfangen. Hier muss das Steuergerät 7 als Bridge die Kommunikationsdaten in den Bordnetzzweig 17 übertragen, wobei in dem veranschaulichten Beispiel auch eine Frequenzumsetzung von der Frequenz f1 auf die Frequenz f2 erfolgt.

Zusätzlich können über einer gezielte Trennung der Versorgungsspannung mittels entsprechender Filter in den Übertragungsbändern unterschiedlicher Frequenzen und/oder mittels getrennter Masserückleitungen "Inseln" oder getrennte Kommunikationsbereiche geschaffen werden.

Als Kommunikationsdaten können die Steuergeräte 5 - 10 alle Daten austauschen, die in herkömmlichen Kraftfahrzeugen über Kommunikationsbusse ausgetauscht werden. Die Kommunikationsdaten können beispielsweise Sensordaten oder Steuerdaten für Aktoren sein oder auch Programmdaten zum Erneuern von Betriebssoftware eines der Steuergeräte 5 - 10 oder zum Parametrieren oder Umprogrammieren der Steuergeräte 5 - 10. Auch Diagnosedaten können als Kommunikationsdaten ausgetauscht werden. Der Datenfluss über das Bordnetz 11 kann auch dazu genutzt werden, um Aktoren zu stellen, wobei hier aus Sicherheitsgründen vorgesehen sein kann, dass sich die Aktionsdatenquelle, welche die Kommunikationsdaten zum Stellen der Aktoren aussendet, eindeutig bei der Fahrzeugkomponente, welches den zu stellenden Aktor aufweist, als zulässige Datenquelle für die Kommunikationsdaten identifiziert hat und dass die Fahrzeugkomponente mit dem Aktor die Aktionsdatenquelle autorisiert hat. Zusätzlich oder alternativ kann vorgesehen sein, dass die durch die Kommunikationsdaten identifizierter Aktion auch zum aktuellen Zeitpunkt (z.B. dem aktiven Betriebsmodus) der Fahrzeugkomponente zulässig sein muss, wie es beispielsweise bei einer Motorsteuerung als Fahrzeugkomponente vorteilhaft sein kann. Die Kommunikationsdaten können somit allgemein dazu genutzt werden, um Sensoren/Aktoren zu parametrieren und/oder lokale Funktionen in der jeweiligen Fahrzeugkomponente zu starten und/oder zu stoppen.

Die Kommunikationsdaten können auch komprimiert ausgesendet werden, das heißt es kann ein Pack-Algorithmus zum Reduzieren des zu übertragenden Datenvolumens implementiert sein.

Die Kommunikationsdaten können auch verschlüsselt ausgetauscht werden, wobei bevorzugt ein dynamischer, mit der Zeit geänderter kryptografischer Schlüssel verwendet wird. Hiermit kann sichergestellt werden, dass nur solche Fahrzeugkomponenten auf die Änderung des Schlüssels reagieren können, die von einem autorisierten Händler und/oder einer autorisierten Werkstatt für das Kraftfahrzeug 1 bereitgestellt worden sind. Neben der Datenverschlüsselung im allgemeinen Datenfluss kann zusätzlich eine einzelne Kommunikation mit einer Punkt-zu-Punkt-Verschlüsselung verschlüsselt sein.

Durch das beschriebene Aussenden der Kommunikationsdaten 19 an alle übrigen Steuergeräte 6 - 10 stehen allen Busteilnehmern oder Fahrzeugkomponenten sämtliche Kommunikationsdaten in Echtzeit zur Verfügung. Hierbei kann das Sendeverhalten einer Fahrzeugkomponente an den Bedarf dahingehend angepasst werden, dass eine dynamische Echtzeit realisiert wird. Dynamische Echtzeit bedeutet, dass die jeweils benötigten Update-Intervalle oder Auffrischzeitpunkte für die Kommunikationsdaten angepasst werden. Wird beispielsweise eine Regelung in dem Kraftfahrzeug 1 realisiert und hierbei beispielsweise der Austausch von Sensordaten zwischen zwei Fahrzeugkomponenten 5 - 10 vorgesehen, so kann für die Regelung eine feste Latenzzeit mit beispielsweise einer Millisekunde Update nötig sein. Dagegen kann beispielsweise das Signalisieren eines Benzininhalts eines Tanks alle 500 Millisekunden durch einen Tankfüllstandssensor erfolgen. Ein Reifendrucksensor kann beispielsweise alle 10 Sekunden senden und dann beispielsweise bei einer Veränderung des Reifendrucks mit einer vorbestimmten Mindestrate den Reifendruck dann alle 100 Millisekunden aussenden. Die dynamische Echtzeit wird z.B. bestimmt von Dateneigenschaften, der Fahrsituation dem Betriebsmodus der Fahrzeugkomponenten, der Datenveränderungsgeschwindigkeit (hier die Reifendruckänderung) und/oder der Datengrenze, also durch Schwellenwertvergleiche.

Jede Fahrzeugkomponente kann somit die von ihr zu sendenden Kommunikationsdaten über das Bordnetz 11 oder allgemein den Kommunikationskanal gemäß den vorgegebenen Echtzeit-Anforderungen aussenden. Alle übrigen Fahrzeugkomponenten werden von den ausgesendeten Kommunikationsdaten erreicht. Fahrzeugkomponenten mit Sensoren senden hierbei beispielsweise Messdaten aus, während Steuergeräte mit Aktoren Aktordaten, die den Zustand der aktuellen Aktoren beschrieben, aussenden können. Da alle Fahrzeugkomponenten die Kommunikationsdaten sehen, können sie diese aus dem Kommunikationskanal auslesen und bei Bedarf für eigene Funktionen verwenden. Um hierbei zuordnen zu können, welche Kommunikationsdaten momentan bei einer bestimmten Kommunikationsfrequenz f1, f2 ausgesendet werden, ist in jedem Steuergerät, das heißt allgemein in jeder Fahrzeugkomponente, ein Sendezeitplan 20 bereitgestellt, welcher angibt, welche sendende Fahrzeugkomponente zu welchem Zeitpunkt auf welcher Sendefrequenz ihre Kommunikationsdaten sendet. Es kann dann vorgesehen sein, dass beispielsweise in festen Zeitabständen der Sendezeitplan 20 aktualisiert wird, das heißt an alle Fahrzeugkomponenten ein neuer Sendezeitplan ausgesendet wird. Hierdurch können dann sendende Fahrzeugkomponenten ihr Sendeverhalten entsprechend umstellen und empfangende Fahrzeugkomponenten entsprechend ihr Empfangsverhalten und/oder Empfangszeitpunkte einstellen.

Grundgedanke bei der Kommunikation im Kraftfahrzeug 1 ist somit, dass alle Busteilnehmer oder Fahrzeugkomponenten transparent alle Sensor- und Aktordaten direkt sehen und diese auch für ihre Funktionen frei nutzen können, quasi im Sinne einer Datendemokratie. Durch verschlüsselte Kommunikation ist verhindert, dass unbefugte die frei ausgesendeten Kommunikationsdaten nutzen oder missbrauchen können. Durch dynamische Echtzeit der Kommunikationsdaten kann das Sendeverhalten der Fahrzeugkomponenten angepasst werden.

Das beschriebene gleichberechtigte Aussenden von Kommunikationsdaten, das lediglich über lokal gespeicherte Sendezeitpläne koordiniert ist, wird auch als Fog-Computing (Nebel-Datenverarbeitung) bezeichnet.

Es kann in einem Kraftfahrzeug auch mehrere transparente Kommunikationskanäle oder so genannten Fogs (Nebel) geben. Die Kommunikationskanäle können über eine Datenverbindung, eine so genannte Bridge oder ein Bridge-Element, miteinander kommunizieren und einzelne Datenströme auch dem anderen Fog oder Kommunikationskanal zur Verfügung stellen, wie dies am Beispiel des Steuergeräts 7 beschrieben worden ist.

Fahrzeugkomponenten können bei dem in Fig. 1 veranschaulichten Kraftfahrzeug 1 auch über ein Hot-Plug-in im laufenden Betrieb mit dem Bordnetz 11 verbunden werden oder von diesem getrennt werden, sodass Sensoren und Aktoren ohne Anpassung der übrigen Steuergeräte 5 - 10 hinzugefügt oder entfernt werden können. Kommunikationsdaten können mit Zeitstempeln versehen werden, um hierdurch ihr Alter für die empfangenden Fahrzeugkomponenten erkennbar zu machen. Kommunikationsdaten können in festen Zeitrastern mit bekannten Latenzen eingespeist werden, was insbesondere für Regelungsaufgaben im Kraftfahrzeug 1 von Vorteil ist. Dies wird dann entsprechend durch den Sendezeitplan 20 festgelegt.

Voraussetzung für das Fog-Computing im Kraftfahrzeug 1 ist natürlich eine genügend große Datenbandbreite, um alle Datenupdates oder Kommunikationsdaten mit der schnellsten Echtzeitanforderung zur Verfügung zu stellen. Hier hat sich die Verwendung des beschriebenen OFDM-Verfahrens als vorteilhaft erwiesen. Insbesondere ist die Verwendung von mehr als vier Frequenzen vorgesehen. Falls die Datenbandbreite nicht ausreicht, können Prioritätsregeln vorgesehen sein, um die Bandbreite zu limitieren. Durch ein flexibles Datenprotokoll kann fließend oder stufenweise von geringem Datenvolumen (beispielsweise vorteilhaft bei geparktem Kraftfahrzeug 1) bis zu hohem Datenvolumen eingestellt werden, um auch eine energieeffiziente Kommunikation zu ermöglichen. Fig. 1 veranschaulicht einen möglichen Kommunikationskanal über eine breitbandige Spannungsversorgung oder Powerline-Kommunikation (PLC), wobei beide Energieversorgungsleitungen 13, 14 als physikalisches Medium genutzt werden können. Das Aussenden und Empfangen der Kommunikationsdaten kann beispielsweise in den jeweiligen PLC-Transceivern verankert werden, wobei hierzu Firmware und/oder eine Hartkodierung denkbar sind. Ein weiteres Beispiel für einen möglichen Kommunikationskanal ist eine drahtlose Kommunikation.

Die Datenverbindung zwischen Steuergeräten 5 - 10 muss nicht stets direkt sein; sie kann auch eine MESH-Architektur realisiert werden, wie dies am Steuergerät 7 veranschaulicht ist. Wichtig ist hierbei, dass durch eine solche Bridge kein Routing durchgeführt werden muss, also keine Entscheidung darüber gefällt werden muss, ob bestimmte Kommunikationsdaten durchgeleitet werden sollen oder nicht. Es wird entscheidungslos stets der gesamte Datenverkehr umgeleitet.

Somit sehen alle Fahrzeugkomponenten alle Kommunikationsdaten direkt ohne Zwischenstation und können ohne Overhead oder Routing auf diese zugreifen. Dies ermöglicht jederzeit neue, insbesondere vernetzte und komplexe Funktionen zu implementieren, ohne die Datenarchitektur, das Bordnetz, den Kabelstrang oder ein Gateway zu verändern. Das Kraftfahrzeug 1 ist jederzeit einfach ohne Hardwareeingriffe funktional veränderbar und/oder erweiterbar. Fahrzeugvarianten mit unterschiedlichen Sensoren und/oder Aktoren können einfach aufgebaut und erweitert werden, da einfach über die Energieversorgungsleitungen neue Komponenten verbunden und diese dann per Hot-Plug-in in den Datenverkehr integriert werden können. Auch das Updaten/Flashen, Programmieren und die Diagnose aller Fahrzeugkomponenten kann über einen zentralen Abgriff an der Energieversorgung, das heißt dem Bordnetz 11, erfolgen. Fahrzeugnetze wie CAN, LIN, Flexway, MOST können komplett entfallen oder parallel weiterbetrieben werden. Gateways, die zur Datenverteilung/-umsetzung mit eigener Entscheidungslogik vorgesehen sind, können entfallen. Da die Versorgungsleitungen 13, 14 des Bordnetzes 11 genutzt werden können, können auch herkömmliche zusätzliche Datenleitungen komplett entfallen.

Besonders vorteilhaft ist die Verwendung des Kommunikationssystems, wie es bei dem Kraftfahrzeug von Fig. 1 vorgesehen ist, um Fahrerassistenzsysteme zu realisieren, da hier die Aktoren und Sensoren im Kraftfahrzeug 1 verteilt angeordnet sein können, also auf mehr als zwei oder drei oder vier Einbauplätze verteilt sein können, ohne dass dies zu Nachteilen beim Bereitstellen der Funktion führen muss. Insbesondere kann hierdurch eine BCM-Funktion (Body Control Module) auf der Grundlage verteilter Fahrzeugkomponenten realisiert werden.

Insgesamt zeigt das Beispiel, wie durch die Erfindung eine transparente, direkte, dynamische Echtzeit Daten-, Netzwerk- und Sicherheitsstruktur in Fahrzeugen auf der Basis einer Fog-Datenverarbeitung bereitgestellt werden kann.

## Patentansprüche

1. Verfahren zum Übertragen von Kommunikationsdaten (19) zwischen einer Vielzahl von Fahrzeugkomponenten (5-10) eines Kraftfahrzeugs (1), wobei die Fahrzeugkomponenten (5-10) über einen gemeinsamen Kommunikationskanal (11) gekoppelt sind und die Fahrzeugkomponenten (5-10) die Kommunikationsdaten (19) jeweils paarweise zwischen sich übertragen, indem jeweils eine der Fahrzeugkomponenten (5) ihre zu sendenden Kommunikationsdaten (19) bedarfsunabhängig und ohne Zieladressat über den Kommunikationskanal (11) aussendet, so dass die gesendeten Kommunikationsdaten (19) mehrere oder alle übrigen Fahrzeugkomponenten (6-10) erreichen, und zumindest eine der übrigen Fahrzeugkomponenten (6-10) die Kommunikationsdaten (19) bedarfsabhängig über den Kommunikationskanal (11) mitliest und speichert,
**dadurch gekennzeichnet, dass**
alle sendenden Fahrzeugkomponenten (5-10) ihre Sendezeitpunkte unabhängig von einem Busmaster auf der Grundlage eines in jeder der sendenden Fahrzeugkomponenten (5-10) gespeicherten Sendezeitplans (20) festlegen.

2. Verfahren nach Anspruch 1, wobei innerhalb einer Teilgruppe der Fahrzeugkomponenten (5-10) die zu übertragenden Kommunikationsdaten (19) mittels einer Punkt-zu-Punkt-Verschlüsselung verschlüsselt werden, so dass zwar alle Fahrzeugkomponenten (5-10) die ausgesendeten, verschlüsselten Kommunikationsdaten empfangen, aber nur die Fahrzeugkomponenten der Teilgruppe die empfangenen Kommunikationsdaten entschlüsseln.

3. Verfahren nach einem der vorhergehenden Ansprüche, wobei zumindest eine der Fahrzeugkomponenten (5-10) die mitgelesenen und gespeicherten Kommunikationsdaten (19) nur dann für eine weitere Verarbeitung nutzt, falls zuvor eine Identität derjenigen Fahrzeugkomponente (5), von welcher die Kommunikationsdaten (19) ausgesendet worden sind, verifiziert worden ist,
und/oder durch die Fahrzeugkomponente ermittelt wird, dass eine Betriebszustandsänderung, welche durch die gespeicherten Kommunikationsdaten (19) ausgelöst werden soll, zu einem aktuellen Zeitpunkt gemäß einem vorbestimmten Überprüfungskriterium zulässig ist.

4. Verfahren nach einem der vorhergehenden Ansprüche, wobei zumindest einige der Kommunikationsdaten (19) zusammen mit einem Zeitstempel ausgesendet werden.

5. Verfahren nach einem der vorhergehenden Ansprüche, wobei als der Kommunikationskanal (11) eine zum Versorgen der Fahrzeugkomponenten (5-10) mit elektrischer Energie bereitgestellte elektrische Versorgungsleitung (13, 14) oder ein Funkverbindung bereitgestellt wird.

6. Verfahren nach einem der vorhergehenden Ansprüche, wobei zum Übertragen der Kommunikationsdaten (19) ein Mehrfrequenz-Übertragungsverfahren, insbesondere eine OFDM, genutzt wird.

7. Verfahren nach Anspruch 6, wobei von den mehreren Frequenzen (f1, f2) zumindest eine nur an eine Untergruppe (6, 7) der Fahrzeugkomponenten (5-10) ausgesendet wird, wobei insgesamt alle Fahrzeugkomponenten (5-10) paarweise untereinander über eine gemeinsame Frequenz (f1) oder über eine die Kommunikationsdaten (19) zwischen zwei der Frequenzen (f1, f2) übertragende Bridgekomponente (7) gekoppelt sind.

8. Kraftfahrzeug (1), aufweisend:
- eine Vielzahl von Fahrzeugkomponenten (5-10) und
- einen die Fahrzeugkomponenten (5-10) zum Übertragen von Kommunikationsdaten (19) koppelnden Kommunikationskanal (11),
**dadurch gekennzeichnet, dass**
das Kraftfahrzeug (1) zum Übertragen der Kommunikationsdaten (19) ein Verfahren nach einem der vorhergehenden Ansprüche durchzuführen eingerichtet ist.

## Claims

1. Method for transmitting communication data (19) between a plurality of vehicle components (5-10) of a motor vehicle (1), wherein the vehicle components (5-10) are coupled via a shared communication channel (11) and the vehicle components (5-10) transmit the communication data (19) in each case in pairs between themselves, in that in each case one of the vehicle components (5) transmits its communication data (19) to be transmitted independently of need and without target addressee via the communication channel (11), such that the transmitted communication data (19) reach several or all remaining vehicle components (6-10), and at least one of the remaining vehicle components (6-10) attendantly reads the communication data (19) depending on need via the communication channel (11) and stores it,
**characterised in that**
all transmitting vehicle components (5-10) specify their transmitting points in time independently of a bus master on the basis of a transmission time plan (20) stored in each of the transmitting vehicle components (5-10).

2. Method according to claim 1, wherein within a partial group of the vehicle components (5-10) the communication data (19) to be transmitted are encrypted by means of an end-to-end encryption such that admittedly all vehicle components (5-10) receive the transmitted, encrypted communication data, but only the vehicle components of the partial group decrypt the received communication data.

3. Method according to any one of the preceding claims, wherein at least one of the vehicle components (5-10) uses the attendantly-read and stored communication data (19) for a further processing only in the case that previously an identity of the vehicle component (5), from which the communication data (19) have been transmitted, has been verified,
and/or it is determined by the vehicle component that a change in operating state, which is supposed to be triggered by the stored communication data (19) is admissible at an actual point in time according to a predetermined check criterion.

4. Method according to any one of the preceding claims, wherein at least some of the communication data (19) are transmitted together with a timestamp.

5. Method according to any one of the preceding claims, wherein as the communication channel (11) an electrical supply line (13, 14), provided to supply the vehicle components (5-10) with electrical energy, or a radio connection is provided.

6. Method according to any one of the preceding claims, wherein for transmitting the communication data (19), a multifrequency transmission method, in particular an OFDM, is used.

7. Method according to claim 6, wherein from the several frequencies (f1, f2) at least one is transmitted only to a subgroup (6, 7) of the vehicle components (5-10), wherein overall all vehicle components (5-10) are coupled in pairs between one another via a shared frequency (f1) or via a bridge component (7) transmitting the communication data (19) between two of the frequencies (f1, f2).

8. Motor vehicle (1) having:
- a plurality of vehicle components (5-10) and
- a communication channel (11) coupling the vehicle components (5-10) for the transmission of communication data (19),
**characterised in that**
the motor vehicle (1) is configured, for the transmission of the communication data (19), to carry out a method according to any one of the preceding claims.

## Revendications

1. Procédé de transmission de données de communication (19) entre une pluralité de composants de véhicule (5-10) d'un véhicule automobile (1), dans lequel les composants de véhicule (5-10) sont couplés par l'intermédiaire d'un canal de communication (11) commun et les composants de véhicule (5-10) se transmettent entre eux, à chaque fois par paire, les données de communication (19) par le fait que, à chaque fois, l'un des composants de véhicule (5) émet ses données de communication (19) à émettre, indépendamment des besoins et sans destinataire, par l'intermédiaire du canal de communication (11) de telle sorte que les données de communication (19) émises atteignent plusieurs ou tous les autres composants de véhicule (6-10) et au moins un des autres composants de véhicule (6-10) lit et mémorise les données de communication (19) en fonction de ses besoins par l'intermédiaire du canal de communication (11),
**caractérisé en ce que**
tous les composants de véhicule (5-10) qui émettent fixent leurs instants d'émission indépendamment d'un maître de bus sur la base d'un planning d'émission (20) mémorisé dans chacun des composants de véhicule (5-10) qui émettent.

2. Procédé selon la revendication 1, dans lequel, au sein d'un sous-groupe des composants de véhicule (5-10), les données de communication (19) à transmettre sont cryptées au moyen d'un cryptage point à point de telle sorte que tous les composants de véhicule (5-10) reçoivent certes les données de communication cryptées émises mais seuls les composants de véhicule du sous-groupe décryptent les données de communication reçues.

3. Procédé selon l'une quelconque des revendications précédentes, dans lequel au moins un des composants de véhicule (5-10) n'utilise les données de communication (19) lues et mémorisées pour un traitement ultérieur que si une identité dudit composant de véhicule (5) par lequel les données de communication (19) ont été émises a été préalablement vérifiée,
et/ou si le composant de véhicule constate qu'un changement d'état de fonctionnement qui doit être déclenché par les données de communication (19) mémorisées est autorisé à un instant actuel selon un critère de contrôle prédéterminé.

4. Procédé selon l'une quelconque des revendications précédentes, dans lequel au moins quelques-unes des données de communication (19) sont émises conjointement avec une information d'horodatage.

5. Procédé selon l'une quelconque des revendications précédentes, dans lequel, comme le canal de communication (11), on met à disposition une ligne d'alimentation électrique (13, 14) mise à disposition pour l'alimentation des composants de véhicule (5-10) en énergie électrique ou une liaison radio.

6. Procédé selon l'une quelconque des revendications précédentes, dans lequel, pour la transmission des données de communication (19), un procédé de transmission à fréquences multiples, en particulier une OFDM, est utilisé.

7. Procédé selon la revendication 6, dans lequel, parmi les plusieurs fréquences (f1, f2), au moins une n'est émise qu'à un sous-groupe (6, 7) des composants de véhicule (5-10) et dans lequel globalement tous les composants de véhicule (5-10) sont couplés entre eux par paire par l'intermédiaire d'une fréquence commune (f1) ou par l'intermédiaire d'un composant passerelle (7) transmettant les données de communication (19) entre deux des fréquences (f1, f2).

8. Véhicule automobile (1), présentant :
- une pluralité de composants de véhicule (5-10) et
- un canal de communication (11) couplant les composants de véhicule (5-10) en vue de la transmission de données de communication (19),
**caractérisé en ce que**,
en vue de la transmission des données de communication (19), le véhicule automobile (1) est équipé pour mettre en oeuvre un procédé selon l'une quelconque des revendications précédentes.
